# FASCICULE DE BREVET EUROPEEN

(11) **EP 2 404 726 B1**
(45) Date de publication et mention de la délivrance du brevet: **14.10.2015**
(21) Numéro de dépôt: 11173468.7
(22) Date de dépôt: 11.07.2011
(51) Int. Cl.: B29C 33/20, B29C 41/04, B29C 41/38

(54) **Moule muni de moyens de verrouillage**
Mit Verschlussmitteln ausgestattete Form
Mould provided with a locking means

(30) Priorité: 09.07.2010 FR 1055601
(43) Date de publication de la demande: 11.01.2012
(73) Titulaire: Compagnie Plastic Omnium, 69007 Lyon (FR)
(72) Inventeur: Arzur, Yoann, 29890 KERLOVAN (FR); Dougere, Jonathan, 56880 PLOEREN (FR); Fontaine, Daniel, 01120 LA BOISSE (FR); Spinola, Joaquim, 71590 CERGY (FR)
(74) Mandataire: Descazeaux, Charles

(56) Documents cités:
- DE-A1-102006 043 514
- JP-A- 3 147 825
- JP-A- 6 328 336
- JP-A- 9 174 365
- JP-A- 9 267 333
- JP-A- 2000 037 756
- JP-A- 2003 326 531
- US-A1- 2006 078 634

## Description

La présente invention concerne un moule, notamment pour le moulage de corps creux, notamment de grande dimension. Un tel moule est par exemple un moule pour le rotomoulage de conteneur de déchets de volume important, en particulier supérieur à 1000L.

On connaît déjà dans l'état de la technique un moule de fabrication de tels conteneurs comprenant une partie fixe et une partie mobile. Deux faces complémentaires de chacune des deux parties du moule sont destinées à être placées en appui l'une contre l'autre lorsque le moule est dans une position fermée. Ces deux faces en appui forment le plan de joint.

Dans l'état de la technique, on utilise un système vis-écrou ou des fixations appelées « sauterelles » pour verrouiller le moule en position fermée. Une sauterelle comprend un élément fixe et un élément mobile telle qu'une tige s'insérant dans l'élément fixe, un levier permettant de serrer la tige dans l'élément fixe.

Dans l'état de la technique, l'activation des moyens de verrouillage est effectuée manuellement par l'opérateur, ce qui engendre un effort au poignet important. En outre, l'opérateur doit souvent, pour avoir accès à tous les moyens de verrouillage et au vu de la configuration de certains moules, prendre des positions peu ergonomiques. De ce fait, cette opération est longue et demande beaucoup d'énergie à l'opérateur. Elle est en outre susceptible d'être génératrice de TMS (troubles musculo-squelettiques) à force d'être répétée au cours de la journée de travail de l'opérateur.

On connaît du document JP 9 267 333 un moule conforme au préambule de la revendication 1.

L'invention vise à remédier à ces inconvénients.

A cet effet, elle a pour objet un moule conforme à la revendication 1.

Ainsi, le verrouillage du moule est effectué grâce à la force appliquée sur l'organe par l'aimant. Lorsque l'organe métallique est placé au voisinage de l'aimant, l'organe est attiré par l'aimant et vient se plaquer contre ce dernier, ce qui assure la fermeture du moule.

Bien entendu, le nombre et la puissance des aimants seront choisis afin que la force des aimants soit supérieure à celle générée par le poids du moule chargé de matière et par les contraintes dues au procédé, par exemple aux mouvements dans la chambre de cuisson lorsqu'il s'agit d'un moule pour le rotomoulage.

Un tel mode de fixation est très simple à mettre en oeuvre et ne demande pas d'efforts de la part de l'opérateur, ce qui permet de diminuer le temps nécessaire au verrouillage du moule et d'augmenter l'ergonomie du poste de moulage, améliorant ainsi les conditions de travail des opérateurs.

En outre, grâce au dispositif de réglage, le verrouillage du moule est effectué de façon satisfaisante.

En effet, dans l'état de la technique, les moyens de verrouillage assurent à la fois le verrouillage du moule et son étanchéité. Les contraintes subies par les parties du moule au niveau des moyens de verrouillage peuvent toutefois avoir tendance à les déformer au niveau du plan de joint du moule. Ce phénomène peut être accentué par l'utilisation d'aimants au vu de l'intensité de la force générée par ceux-ci. Ces contraintes doivent donc être correctement réparties au niveau des différents moyens de verrouillage pour éviter les fuites de matière en dehors du moule.

Grâce au dispositif de réglage, on assure un verrouillage optimal du moule tout en évitant une déformation du plan de joint, dans le cas par exemple où les faces de contact de l'aimant et de l'organe ne sont pas tout à fait coplanaires, puisque la position de l'aimant et/ou de l'organe métallique est réglable indépendamment de celle du plan de joint.

Le moule comprend plus particulièrement une pluralité de paires aimant-organe métallique, réparties sur tout le contour du moule.

Selon un mode de réalisation préférentiel, l'aimant est un aimant polarisable, le moule comprenant en outre des moyens d'alimentation électrique de l'électroaimant.

Un tel aimant est par exemple un électroaimant qui produit un champ magnétique lorsqu'il est alimenté en courant électrique ou un aimant qui peut être polarisé une fois qu'il a été soumis à un champ électrique. La polarité de ce type d'aimant peut être modifiée en fonction du type de courant auquel il est soumis. On ne détaillera pas plus en détails le fonctionnement de tels aimants, qui ne constituent pas l'objet de l'invention et sont connus de l'état de la technique.

Un tel aimant permet encore d'améliorer l'ergonomie du poste de moulage et d'améliorer les conditions de travail de l'opérateur.

En effet, dans l'état de la technique, un système vis-écrou est désactivé à l'aide d'une clé à chocs dont l'utilisation est très pénible pour l'utilisateur au vu du bruit et des chocs que cela génère dans son poignet. Une sauterelle doit être désactivée à l'aide d'un levier, ce qui est une opération complexe qui demande également un effort important à l'opérateur.

Grâce à l'invention, le verrouillage du moule est effectué après qu'un courant ait été appliqué à l'aimant, qui exerce dans ce cas une force sur l'organe métallique. Ce courant peut être continu, ou de façon plus avantageuse, peut être une impulsion électrique qui permet la polarisation durable de l'aimant sans que celui-ci ne soit alimenté en électricité de façon permanente. Lorsque l'on souhaite ouvrir le moule, on inverse la polarité de l'aimant en lui appliquant un courant ayant des paramètres différents, la force exercée par l'aimant n'attirant alors pas l'organe et les deux parties du moule pouvant être séparées aisément. On obtient ainsi un déverrouillage très simple et performant, qui ne demande pas d'efforts importants de la part de l'opérateur.

Ce mode de réalisation est particulièrement avantageux parce qu'il facilite aussi le déverrouillage du moule.

Selon la revendication 1, le dispositif de réglage comprend au moins un module monté entre un des éléments parmi l'organe et l'aimant et la partie correspondante du moule, chaque module étant conformé de sorte que l'élément présente au moins un degré de liberté relativement à la partie correspondante. En d'autres termes, la position de l'organe est modifiable selon au moins un degré de liberté.

Le moule peut comprendre un seul module monté entre l'organe et la partie correspondante du moule ou entre l'aimant et la partie correspondante du moule. Il peut également comprendre deux modules reliant chacun un élément à la partie correspondante du moule.

Selon la revendication 1, l'élément parmi l'organe ou l'aimant est mobile selon le degré de liberté relativement à la partie correspondante du moule.

Dans un autre mode de réalisation, le module peut également comprendre des moyens de fixation avec jeu de l'élément, permettant le réglage du positionnement de l'élément selon le degré de liberté puis la fixation de l'élément dans la position adéquate obtenue. De tels moyens comprennent par exemple un trou oblong.

Bien entendu, lorsque les éléments sont mobiles selon plusieurs degrés de liberté, la combinaison des deux modes de réalisation est possible, la position d'un élément pouvant être réglée grâce à un moyen de fixation avec jeu selon un degré de liberté et celui-ci pouvant être mobile selon un autre degré de liberté.

L'ensemble des degrés de liberté différents autorisés par les modules relativement au moule en position fermée est en particulier supérieur ou égal à 3

Trois degrés de liberté différents est en effet le nombre de degrés de liberté optimal pour assurer un positionnement de l'ensemble aimant - organe indépendant de celui du plan de joint.

De préférence, pour chacun des degrés de liberté de la liste suivante, au moins l'un des éléments présente ce degré de liberté relativement à la partie correspondante du moule:
- en translation selon une direction sensiblement parallèle à une direction de fermeture du moule,
- en rotation selon une première direction sensiblement perpendiculaire à la direction de fermeture du moule,
- en rotation selon selon une deuxième direction sensiblement perpendiculaire à la direction de fermeture du moule et à la première direction.

Ce réglage est optimal et permet d'éviter la déformation du plan de joint sans pour autant que le dispositif de réglage ne soit trop complexe. Pour parvenir à ce réglage, le moule peut par exemple comprendre un premier module agencé entre l'organe et une partie du moule, de sorte que l'organe soit mobile en rotation selon la première direction et un deuxième module agencé entre l'aimant et l'autre partie du moule, de sorte que la position de l'aimant soit réglable en translation et en rotation selon la deuxième direction grâce à des moyens de fixation avec jeu.

Les modules peuvent bien entendu comprendre des degrés de libertés supplémentaires. Par exemple, les deux modules peuvent être mobiles en translation selon la même direction. Un seul des éléments peut également être mobile relativement à la partie du moule sur laquelle il est monté.

Au moins un des éléments est notamment mobile en rotation selon une direction sensiblement tangente à la ligne de plan de joint (délimitant la chambre de moulage au niveau des faces d'interface des deux parties du moule) en le lieu de fixation de l'élément sur le moule.

En effet, on a constaté qu'un défaut d'alignement de l'aimant et de l'organe selon cette direction était particulièrement susceptible de déformer le moule au niveau du plan de joint. Le fait qu'au moins un des éléments soit mobile selon cette direction permet donc de minimiser ce défaut d'alignement tout au long de la vie du moule, plus qu'un moyen de fixation avec jeu dont le réglage peut être légèrement modifié au cours du temps et au vu des conditions liées au procédé de moulage.

Avantageusement, au moins un des éléments est mobile en translation selon une direction sensiblement parallèle à une direction de fermeture du moule, le dispositif de réglage comprenant des moyens de rappel agencés pour pousser cet élément contre l'autre élément des moyens de verrouillage.

Cela permet d'assurer une fermeture convenable du moule à tout moment du cycle de moulage. En effet, comme on le sait, le moule est chauffé lors du cycle de moulage, notamment lors de l'étape de cuisson lorsqu'il s'agit de rotomoulage. Durant cette étape, il est possible que les différentes parties du moule se déforment sous l'effet des dilatations thermiques.

Dans ce cas, l'organe et l'aimant s'éloignent l'un de l'autre. Or, comme la force exercée par l'aimant diminue proportionnellement au carré de la distance dont sont éloignés l'aimant et l'organe, il est préférable pour assurer une bonne fermeture d'éviter cette configuration éloignée.

Les moyens de rappel permettent de s'opposer à cet effet de la dilatation thermique en rappelant les éléments de verrouillage l'un contre l'autre, assurant alors un verrouillage sûr et constant des deux parties du moule en position de fermeture.

Le moule comprend également de préférence des moyens d'indication de l'état de l'aimant, aptes à indiquer à l'opérateur si les moyens de verrouillage sont activés ou non, c'est à dire si l'aimant exerce une force sur l'organe ou non. Cela permet de s'assurer que l'aimant fonctionne correctement avant de commencer le cycle de moulage.

Les moyens d'indication peuvent par exemple comprendre une tige métallique munie d'un organe d'indication à son extrémité, la tige étant mobile relativement à un bâti, entre une position dans laquelle l'organe d'indication est visible depuis l'extérieur du bâti et une position dans laquelle l'organe n'est pas visible.

Les moyens d'indication sont situés au voisinage de l'aimant ou de l'organe métallique.

Ainsi, lorsque les moyens de verrouillage ne sont pas activés, l'opérateur aperçoit l'organe d'indication depuis l'extérieur du bâti. En revanche, lorsqu'ils le sont, l'aimant attire la tige vers lui et l'organe se place de ce fait à l'intérieur du bâti de façon à ne plus être visible depuis l'extérieur. L'opérateur est alors informé que les moyens de verrouillage fonctionnent correctement.

Les moyens d'indication comprennent également des moyens de rappel élastique agencés pour rappeler la tige dans la position visible de l'organe d'indication. On s'assure ainsi que, lorsque les moyens de verrouillage ne sont pas activés, l'organe d'indication est toujours visible. Ces moyens de rappel sont bien sûr choisis pour que la force qu'ils exercent sur la tige soit inférieure à celle exercée sur celle-ci par l'aimant.

L'organe métallique et/ou l'aimant et/ou un élément de support d'un module du dispositif de réglage est soudé sur une partie correspondante du moule. C'est une façon relativement simple de rapporter les moyens de verrouillage sur le moule. Lorsque le moule est muni de dispositifs de réglage, ce mode de fixation est particulièrement adapté car il n'est pas nécessaire que le positionnement de l'organe ou de l'aimant soit extrêmement précis.

Avantageusement, le moule comprend des moyens de protection, tels qu'un arceau de sécurité, empêchant l'accès d'un opérateur à l'aimant et l'organe métallique. Ces moyens de protection sont par exemple placés sur l'aimant et/ou l'organe métallique. On évite ainsi qu'une main de l'utilisateur soit coincée entre l'aimant et l'organe lorsqu'ils viennent en contact suite à la polarisation de l'aimant.

L'invention s'applique notamment à un moule pour le moulage de corps creux, notamment de grandes dimensions. Il s'applique par exemple au rotomoulage d'un conteneur de collecte de déchets, plus particulièrement un conteneur de grand volume, supérieur à 1000L.

L'invention sera mieux comprise à la lecture de la description qui va suivre, donnée uniquement à titre d'exemple et faite en se référant aux dessins dans lesquels :
- la figure 1 est une vue en perspective d'un moule selon un mode de réalisation de l'invention,
- la figure 2 est une vue en perspective d'un éclaté des moyens de verrouillage du moule de la figure 1 lorsqu'ils sont situés sur le moule,
- la figure 3 est une vue en perspective des moyens verrouillage de la figure 2 , isolés du reste du moule,
- la figure 4 est une vue en perspective des moyens de verrouillage d'une variante du moule de la figure 1, isolés du reste du moule
- la figure 5 est une vue schématique et en coupe des moyens de verrouillage d'une autre variante du moule de la figure 1.

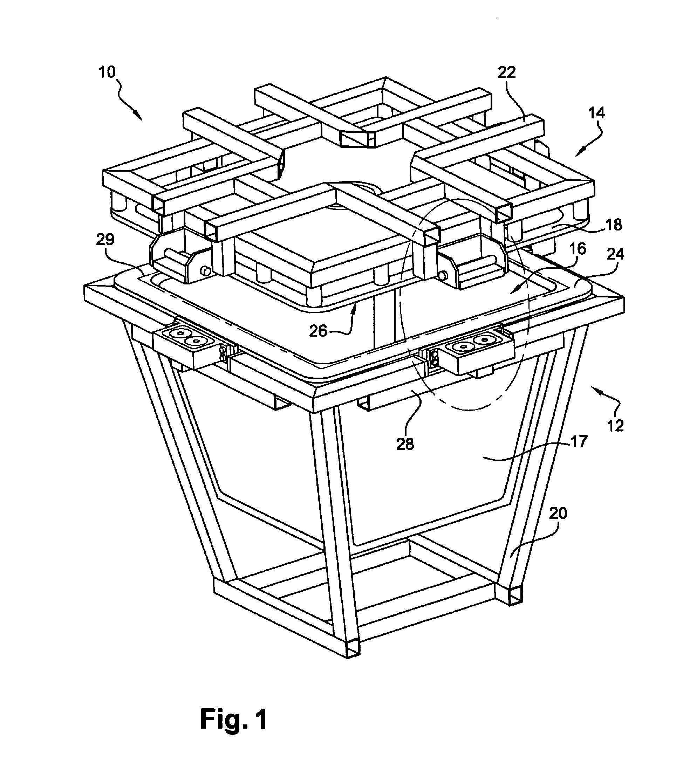

On a représenté sur la figure 1 un moule 10 pour le rotomoulage d'une pièce en matière plastique. Le moule comprend une première partie 12 fixe et une deuxième partie mobile 14. Les deux parties sont mobiles l'une par rapport à l'autre entre une position d'ouverture et une position de fermeture dans laquelle elles délimitent un volume formant la chambre de moulage 16.

Chaque partie comprend une platine de moulage 17, 18 délimitant la chambre de moulage et un châssis 20, 22 formés de profilés creux assemblés et permettant de soutenir la platine de moulage et de la fixer sur un bras articulé apte à faire tourner le moule dans le compartiment de cuisson lors du procédé de rotomoulage.

Chaque platine de moulage comporte une face d'interface 24, 26 destinée à être en contact avec la face d'interface 26, 24 de l'autre platine lorsque le moule est en position fermée. Ces faces d'interface 24, 26 forment le plant de joint du moule. Elles délimitent le contour du moule, également appelé ligne de plan de joint 29, et représentée en pointillés sur la figure 1. La ligne de plan de joint et fermée et forme essentiellement un carré. Elle est située dans un plan perpendiculaire à la direction de fermeture du moule.

Le moule comporte en outre des moyens de verrouillage constitués de quatre ensemble 28 situés chacun au milieu d'un des côtés du carré formé par la ligne de plan de joint.

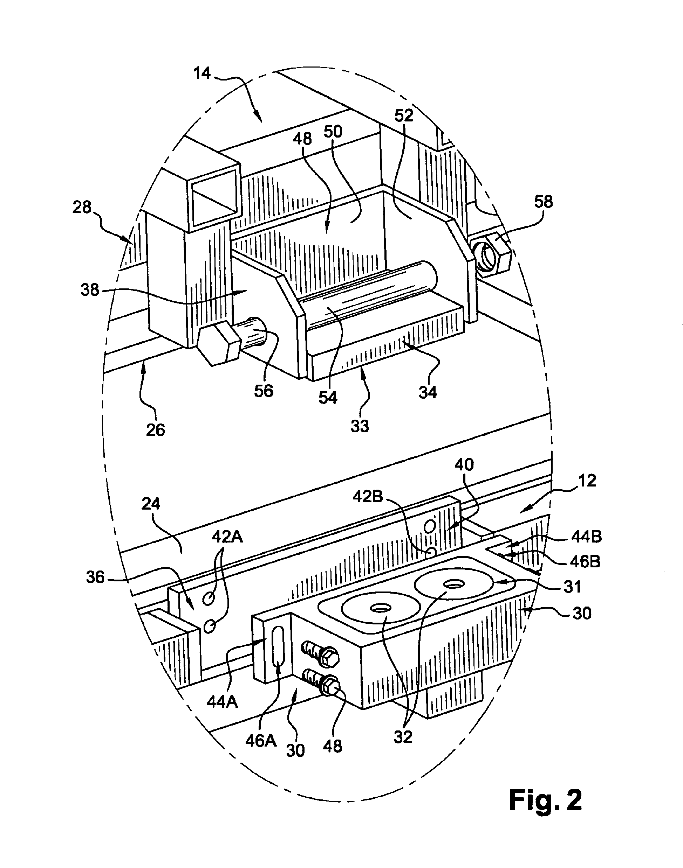

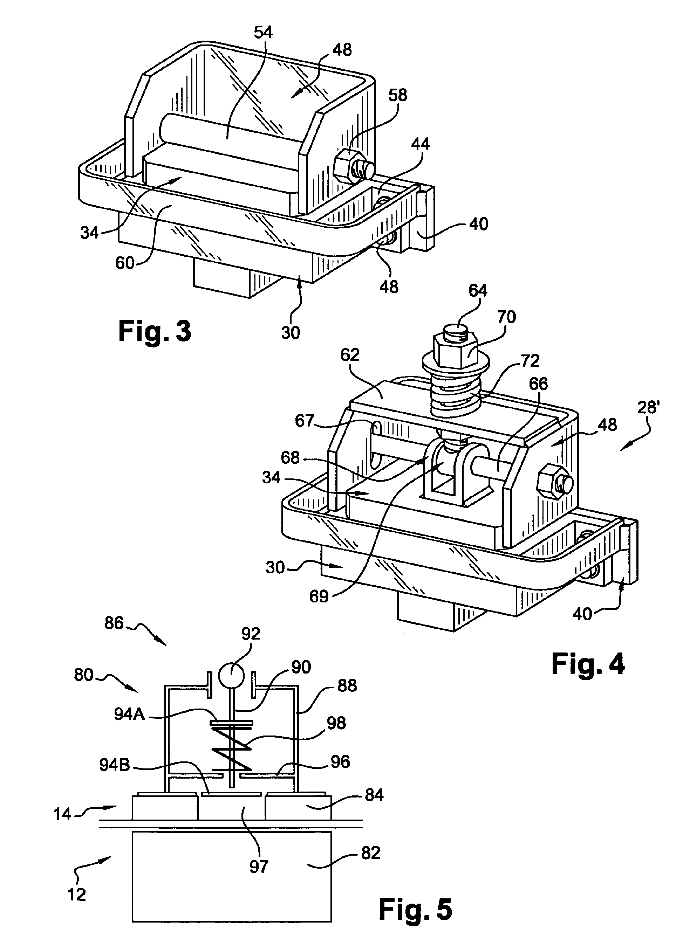

On va décrire un peu plus en détails un ensemble 28 grâce aux figures 2 et 3.

Un tel ensemble comprend deux éléments : un premier élément 30 fixé sur la partie fixe 12 du moule et étant constitué par un système aimanté conformé comme une plaque et comprenant au moins un aimant polarisable et deux bobines 32 visibles sur la figure 3.

L'ensemble comprend également un deuxième élément 34 fixé sur la partie mobile 14 du moule et formé par un organe métallique, en forme de plaque.

Le moule peut être verrouillé du fait que l'aimant du système 30 attire vers lui l'organe métallique, une fois qu'il est polarisé. La force générée par l'aimant permet de maintenir les parties fixe 12 et mobile 14 du moule l'une contre l'autre. En effet, du fait de cette force, une face de contact 33 de l'organe 34 vient se plaquer contre une face de contact 31 du système aimanté 30.

Le moule comprend également des moyens d'alimentation électrique de l'aimant du système 30, comprenant notamment des moyens d'alimentation des bobines 32 en électricité. Ces moyens peuvent comprendre une connexion pour relier la partie fixe 12 au secteur de façon occasionnelle, ce qui est plus adapté en matière de sécurité que de relier le moule au secteur de façon permanente et également plus pratique.

Ainsi, lorsque l'on veut que l'aimant exerce une force sur l'organe 34, on polarise l'aimant en faisant passant un courant dans les moyens d'alimentation et les bobines 32. L'aimant est alors polarisé de façon permanente et est susceptible d'attirer vers lui l'organe métallique et d'assurer le verrouillage du moule.

Lorsqu'on souhaite déverrouiller le moule, on applique dans le système 30 un courant électrique inverse qui permettra d'inverser la polarisation de l'aimant. On ne détaille pas plus avant un tel système, connu en soi et disponible dans le commerce.

Le système aimanté 30 et l'organe métallique 34 sont chacun reliés respectivement à la partie fixe 12 et à la partie mobile 14 du moule au voisinage des faces d'interface 24, 26 de ces parties. Ils sont plus particulièrement reliés à chaque partie 12, 14 par l'intermédiaire d'un module 36, 38 permettant le réglage de la position relative du système aimanté 30 et de l'organe métallique 34.

Le module 36 comprend un bâti formé par une plaque plane 40 soudée sur le châssis de la partie fixe 12. Cette plaque plane comprend deux paires d'orifices de fixation 42A, 42B, à chacune de ses extrémités latérales.

Le module comprend également deux ailettes 44A, 44B soudées au deux extrémités latérales du système aimanté 30 et comprenant chacune un orifice oblong 46A, 46B. Les ailettes 44A, 44B sont destinées à être rapportées sur la plaque 40 par vissage à l'aide de vis 43 s'engageant dans l'orifice oblong 46A, 46B superposé aux orifices 42A, 42B de la plaque 40.

La dimension longitudinale de chaque orifice oblong 46A, 46B est supérieure à l'écartement entre les deux orifices 42A, 42B de la paire correspondante et sa dimension transversale est supérieure à la dimension correspondante des orifices 42A, 42B. Cela permet ainsi de régler la position du système aimanté selon les deux degrés de liberté suivants : en translation selon la direction de fermeture du moule (correspondant à la dimension longitudinale du trou oblong) et en rotation selon un axe perpendiculaire à la direction de fermeture du moule et également perpendiculaire au côté de la ligne de plan de joint au niveau duquel est fixé l'aimant.

Le module 38 reliant l'organe 34 à la partie mobile du moule comprend un bâti 48 présentant une section en U, comprenant une paroi centrale 50 et deux parois latérales 52 et soudé au châssis 22 de la partie mobile 14 au niveau de sa paroi centrale 50. Le module 38 comprend également un manchon tubulaire 54 soudé sur l'organe métallique 34. Ce manchon 54 est destiné à être fixé au bâti par l'intermédiaire d'un système vis 56-écrou 58. La vis 56 est insérée dans le manchon 54 et dans deux orifices ménagés en regard chacun dans une paroi latérale 52 du bâti 48, avant d'être serrée et maintenue en position grâce à l'écrou 58.

Le manchon 54 est ainsi mobile relativement au bâti 48 selon le degré de liberté suivant : en rotation selon un axe parallèle au côté de la ligne de plan de joint au niveau duquel sont fixés les moyens de verrouillage.

Ainsi, on peut régler la position des moyens de verrouillage selon trois degrés de libertés relativement au bâti. De cette façon, on s'assure que l'organe métallique 34 et le système aimanté 30 sont coplanaires et qu'aucune force n'est susceptible de déformer le moule au niveau de son plan de joint. Du fait de la mobilité de l'organe 34 selon un degré de liberté, on diminue encore les risques d'une déformation du plan de joint.

Comme on le voit sur la figure 3, les moyens de verrouillage comprennent également des moyens de protection de l'utilisateur, constitués par un arceau 60 soudé sur la plaque 40. Cet arceau est agencé de façon à dépasser de la face de contact 31 du système aimanté 30. De cette façon, lorsque le moule est en position fermée et que l'aimant du système 30 n'a pas encore été polarisé, l'arceau 60 empêche un utilisateur de glisser sa main entre les faces de contact du système 30 et de l'organe 34, pour éviter que cette main ne soit coincée entre les faces de contact 31, 33 suite à la polarisation de l'aimant.

On va maintenant décrire des moyens de verrouillage 28' selon une variante du mode de réalisation précédemment décrit. Tous les éléments du mode de réalisation précédent non décrits ou désignés par des références identiques se retrouvent dans le mode de réalisation ci-après.

Les moyens de verrouillage 28' sont modifiés uniquement au niveau du module permettant le réglage de la position de l'organe 34. Une plaque supérieure 62 est en effet agencée sur le bâti 48 de façon à être fixe relativement au bâti 48. Cette plaque est trouée pour laisser passer une tige 64 s'étendant selon une direction essentiellement normale à l'organe 34.

Les moyens 28' comprennent également un axe 66 formé par un système sensiblement identique au système vis 56 - écrou 58 du mode de réalisation précédent. Cet axe 66 traverse également le bâti 48 par des orifices 67 situés en regard sur chacune des parois latérales 52 du bâti. Cet axe est relié à l'organe 34 par le biais d'une articulation 68 rapportée sur l'organe, par exemple par soudure.

La tige 64 est également reliée à l'axe 66 par le biais d'un élément de fixation 69 conformé en T. L'axe 66 est ainsi solidaire du bâti 48 et à la tige 64 et l'organe 34 est mobile en rotation relativement à l'axe 66.

Un écrou 70 est agencé à l'extrémité supérieure de la tige et un ressort 72 est également mis en place sur celle-ci. Une première extrémité du ressort est d'un seul tenant avec l'écrou alors que l'autre extrémité du ressort est d'un seul tenant avec la plaque 62. Lorsque la position optimale de l'organe 34 relativement à l'aimant 30 est obtenue, la position de l'écrou 70 est réglée pour que le ressort hélicoïdal soit en traction, c'est-à-dire que sa longueur soit supérieure à sa longueur au repos.

De cette façon, lorsque le moule subit une dilatation, du fait de son passage dans la chambre de cuisson, et que l'organe a ainsi tendance à s'éloigner du système aimanté 30, le ressort génère une force qui a tendance à déplacer l'extrémité de la tige vers la plaque fixe 62. Dans ce cas, l'axe 66 se déplace également à l'intérieur du trou oblong en direction du système aimanté 30 et entraîne avec lui l'organe 34. Ainsi, l'organe 34 et le système aimanté 30 restent plaqués l'un contre l'autre durant tout le procédé de moulage, assurant ainsi un bon verrouillage du moule en toutes circonstances.

On a représenté ci-après schématiquement un autre mode de réalisation des moyens de verrouillage selon l'invention.

Dans ce mode de réalisation, les moyens de verrouillage 80 comprennent un système aimanté 82 et un organe métallique 84 agencés chacun sur une partie correspondante 12, 14 du moule. On ne décrit pas dans ce mode de réalisation le dispositif de réglage de la position des moyens de verrouillage mais des moyens tels que ceux décrits précédemment sont également agencés sur le moule.

Le moule comprend également des moyens 86 d'indication de l'état de l'aimant, permettant de vérifier que l'aimant est polarisé correctement de façon à attirer vers lui l'organe.

Ces moyens comprennent un dispositif agencé sur l'organe 84. Un tel dispositif comprend un cache 88 à l'intérieur duquel est agencé une tige métallique 90 munie d'un organe d'indication 92, notamment une boule colorée, par exemple en rouge, ménagé à son extrémité la plus éloignée de l'aimant 82, 86. La tige comprend deux butées 94A, 94B et est reliée au bâti de façon à être mobile relativement au cache 88 grâce à un palier 96 du cache traversé par la tige.

La tige est mobile entre une position d'indication dans laquelle l'organe d'indication est visible depuis l'extérieur et représentée à la figure 5, position dans laquelle la butée 94B est en appui contre le palier, et une position dans laquelle l'organe d'indication est à l'intérieur du cache, position dans laquelle la butée 94B est en contact avec le système aimanté 82 lorsque le moule est en position de fermeture. En regard du dispositif, l'organe métallique 84 comprend un ajour 97 qui permet le contact de la tige 90 et du système aimanté 82.

Un ressort 98 est agencé autour de la tige entre la butée 94A et le palier 96. Ce ressort est au repos lorsque l'organe est position d'indication.

De cette façon, lorsque l'aimant n'est pas polarisé, du fait de la force du ressort, l'organe d'indication 92 est situé à l'extérieur du cache. Lorsque l'aimant est polarisé, l'attraction de l'aimant sur la tige génère une force attirant celle-ci en direction de l'aimant et au contact de celui-ci, l'organe étant de fait à l'intérieur du cache.

L'invention n'est pas limitée aux modes de réalisation précédemment décrits.

Tout d'abord la forme du moule n'est pas limitée à ce qui a été décrit. Celui-ci peut également être un moule autre qu'un moule de rotomoulage. Il peut être utilisé pour fabriquer de préférence des conteneurs de déchets, notamment de grandes dimensions, mais également tout type d'objets.

En outre, les moyens de verrouillage peuvent être répartis autrement sur le moule.

L'aimant pourrait également ne pas être un aimant polarisable, ou pourrait être un électroaimant.

De plus, le dispositif de réglage de la position des moyens de verrouillage n'est pas limité à ce qui a été décrit. Seul l'organe ou le système aimanté peut être monté sur un module de réglage. En outre, il n'est pas obligatoire d'avoir trois degrés de liberté distincts. Les degrés de liberté peuvent également varier : par exemple les éléments peuvent être mobile l'un par rapport à l'autre selon tous leurs degrés de liberté ou leur position peut être réglable grâce à des moyens de fixation avec jeu selon tous leur degré de libertés.

La structure du dispositif de réglage n'est pas non plus limitée à ce qui a été décrit. Les bâtis pourraient par exemple prendre d'autres formes, etc.

On notera également que l'arceau de sécurité et le dispositif d'indication sont des éléments optionnels de l'invention qui peuvent être supprimés ou configurés différemment de ce qui a été décrit.

## Revendications

1. Moule (10) comprenant une partie fixe (12) et une partie mobile (14) délimitant une chambre de moulage (16), la partie fixe du moule comprenant une face d'interface (24) destinée à être placée en appui contre une face d'interface (26) complémentaire de la partie mobile lorsque le moule est en position fermée, le moule comportant des moyens de verrouillage (28 ; 60 ; 80) en position fermée comportant :
- au moins un organe métallique (34 ; 84) agencé sur une des parties (14) du moule au voisinage de la face d'interface de cette partie,
- au moins un aimant (30 ; 82) agencé sur l'autre des parties (12) du moule pour être placé en regard de l'organe métallique lorsque le moule se trouve en position fermée,
- au moins un dispositif de réglage (36 ; 38) de la position d'au moins l'un des éléments parmi l'organe métallique et l'aimant,
le dispositif de réglage comprenant au moins un module (36 ; 38) monté entre un des éléments (30 , 34) et la partie correspondante (12; 14) du moule, chaque module étant conformé de sorte que l'élément (30 , 34) parmi l'organe ou l'aimant est mobile selon un degré de liberté relativement à la partie correspondante du moule, **caractérisé en ce que** cet élément est mobile en rotation selon une direction sensiblement tangente à la ligne de plan de joint, délimitant la chambre de moulage au niveau des faces d'interface des deux parties du moule, en le lieu de fixation de l'élément sur le moule.

2. Moule selon la revendication précédente, dans lequel l'aimant est un aimant polarisable (30), le moule comprenant en outre des moyens d'alimentation électrique (32) de l'aimant.

3. Moule selon l'une quelconque des revendications 1 et 2, dans lequel le module peut également comprendre des moyens de fixation avec jeu (42A-42B ; 46A-46B) de l'élément (32), permettant le réglage du repositionnement de l'élément selon le degré de liberté.

4. Moule selon l'une quelconque des revendications 1 à 3, dans lequel l'ensemble des degrés de liberté différents autorisés par les modules (36 ; 38) relativement au moule en position fermée est en particulier supérieur ou égal à 3

5. Moule selon la revendication précédente, dans lequel, pour chacun des degrés de libertés de la liste suivante, au moins un des éléments présente ce degré de liberté:
- en translation selon une direction sensiblement parallèle à une direction de fermeture du moule :
- en rotation selon une première direction sensiblement perpendiculaire à la direction de fermeture du moule,
- en rotation selon selon une deuxième direction sensiblement perpendiculaire à la direction de fermeture du moule et à la première direction.

6. Moule selon l'une quelconque des revendications précédentes, dans lequel au moins un des éléments (34) est mobile en translation selon une direction sensiblement parallèle à une direction de fermeture du moule, le dispositif de réglage comprenant des moyens de rappel (72) agencés pour pousser cet élément contre l'autre élément (32) des moyens de verrouillage (28).

7. Moule selon l'une quelconque des revendications précédentes, comprenant des moyens d'indication (86) de l'état de l'aimant.

8. Moule selon la revendication précédente, dans lequel les moyens d'indication comprennent une tige métallique (90) munie d'un organe d'indication (92) à une extrémité, la tige étant mobile relativement à un bâti (88), entre une position dans laquelle l'organe d'indication est visible depuis l'extérieur du bâti et une position dans laquelle l'organe n'est pas visible.

9. Moule selon la revendication précédente, dans lequel les moyens d'indication comprennent également des moyens de rappel élastique (98) agencés pour rappeler la tige (94) dans la position visible de l'organe d'indication.

10. Moule selon l'une quelconque des revendications précédentes, dans lequel le moule comprend des moyens de protection, tels qu'un arceau de sécurité (60), empêchant l'accès d'un opérateur à l'aimant et l'organe.

## Patentansprüche

1. Form (10), die einen feststehenden Teil (12) und einen beweglichen Teil (14) umfasst, der eine Formkammer (16) begrenzt, wobei der feststehende Teil der Form eine Schnittstellenfläche (24) umfasst, die dafür bestimmt ist, in Abstützung gegen eine komplementäre Schnittstellenfläche (26) des beweglichen Teils platziert zu sein, wenn die Form in geschlossener Position ist, wobei die Form Mittel zur Verriegelung (28; 60; 80) in geschlossener Position aufweist, die Folgendes aufweisen:
- wenigstens ein Metallorgan (34; 84), das an einem der Teile (14) der Form in der Nähe der Schnittstellenfläche dieses Teils vorgesehen ist,
- wenigstens einen Magneten (30; 82), der an dem anderen der Teile (12) der Form vorgesehen ist, um dem Metallorgan gegenüber platziert zu sein, wenn sich die Form in geschlossener Position befindet,
- wenigstens eine Vorrichtung zum Einstellen (36; 38) der Position wenigstens eines der Elemente von dem Metallorgan und dem Magneten,
wobei die Einstellvorrichtung wenigstens ein Modul (36, 38) umfasst, das zwischen einem der Elemente (30; 34) und dem entsprechenden Teil (12; 14) der Form gelagert ist, wobei jedes Modul so ausgebildet ist, dass das Element (30; 34) von dem Metallorgan oder dem Magneten gemäß einem Freiheitsgrad relativ zu dem entsprechenden Teil der Form beweglich ist, **dadurch gekennzeichnet, dass** dieses Element in einer Richtung drehbeweglich ist, die zu der Trennebenenlinie im Wesentlichen tangential ist, und die Formkammer im Bereich der Schnittstellenflächen der zwei Teile der Form am Ort der Befestigung des Elements an der Form begrenzt.

2. Form nach dem vorhergehenden Anspruch, wobei der Magnet ein polarisierbarer Magnet (30) ist, wobei die Form ferner Mittel zur elektrischen Versorgung (32) des Magneten umfasst.

3. Form nach einem der Ansprüche 1 und 2, wobei die Form ferner Mittel zur Befestigung mit Spiel (42A-42B; 46A-46B) des Elements (32) umfassen, die das Einstellen der Neupositionierung des Elements gemäß dem Freiheitsgrad ermöglichen.

4. Form nach einem der Ansprüche 1 bis 3, wobei die Gesamtheit der verschiedenen Freiheitsgrade relativ zu der Form in geschlossener Position, die durch die Module (36; 38) gestattet werden, insbesondere größer oder gleich 3 ist.

5. Form nach dem vorhergehenden Anspruch, wobei, für jeden der Freiheitsgrade der folgenden Auflistung, wenigstens eines der Elemente diesen Freiheitsgrad aufweist:
- in Translation in einer Richtung, die zu einer Schließrichtung der Form im Wesentlichen parallel ist,
- in Rotation in einer ersten Richtung, die zu der Schließrichtung der Form im Wesentlichen lotrecht ist,
- in Rotation in einer zweiten Richtung, die zu der Schließrichtung der Form und zu der ersten Richtung im Wesentlichen lotrecht ist.

6. Form nach einem der vorhergehenden Ansprüche, wobei wenigstens eines der Elemente (34) in einer Richtung, die zu einer Schließrichtung der Form im Wesentlichen parallel ist, in Translation beweglich ist, wobei die Einstellvorrichtung Rückstellmittel (72) umfasst, die vorgesehen sind, um dieses Element gegen das andere Element (32) der Verriegelungsmittel (28) zu drücken.

7. Form nach einem der vorhergehenden Ansprüche, die Mittel zum Anzeigen (86) des Zustands des Magneten umfasst.

8. Form nach dem vorhergehenden Anspruch, wobei die Anzeigemittel einen Metallstab (90) umfassen, der an einem Ende mit einem Anzeigeorgan (92) versehen ist, wobei der Stab relativ zu einem Gehäuse (88) beweglich ist zwischen einer Position, in der das Anzeigeorgan von außerhalb des Gehäuses sichtbar ist, und einer Position, in der das Organ nicht sichtbar ist.

9. Form nach dem vorhergehenden Anspruch, wobei die Anzeigemittel ferner elastische Rückstellmittel (98) umfassen, die vorgesehen sind, um den Stab (94) in die sichtbare Position des Anzeigeorgans zurückzustellen.

10. Form nach einem der vorhergehenden Ansprüche, wobei die Form Schutzmittel, wie einen Sicherheitsbügel (60), umfasst, der den Zugriff eines Bedieners auf den Magneten und das Organ verhindert.

## Claims

1. Mould (10) comprising a fixed part (12) and a mobile part (14) delimiting a moulding chamber (16), the fixed part of the mould comprising an interface face (24) intended to be placed bearing against a complementary interface face (26) of the mobile part when the mould is in the closed position, the mould comprising locking means (28; 60; 80) in the closed position comprising:
- at least one metal member (34; 84) arranged on one of the parts (14) of the mould in the vicinity of the interface face of that part,
- at least one magnet (30; 82) arranged on the other of the parts (12) of the mould to be placed facing the metal member when the mould is in the closed position,
- at least one device (36; 38) for adjusting the position of at least one of the elements out of the metal member and the magnet,
the adjustment device comprising at least one module (36; 38) mounted between one of the elements (30, 34) and the corresponding part (12; 14) of the mould, each module being formed such that the element (30, 34) out of the member or the magnet is mobile according to a degree of freedom relative to the corresponding part of the mould, **characterized in that** this element is rotationally mobile in a direction substantially tangential to the joint plane line, delimiting the moulding chamber at the interface faces of the two parts of the mould, in the place of fixing of the element on the mould.

2. Mould according to the preceding claim, in which the magnet is a polarizable magnet (30), the mould further comprising electrical power supply means (32) for the magnet.

3. Mould according to either of Claims 1 and 2, in which the module may also comprise means (42A-42B; 46A-46B) for fixing the element (32) with play, making it possible to adjust the repositioning of the element according to the degree of freedom.

4. Mould according to any one of Claims 1 to 3, in which the set of different degrees of freedom permitted by the modules (36; 38) relative to the mould in the closed position is in particular greater than or equal to 3.

5. Mould according to the preceding claim, in which, for each of the degrees of freedom in the following list, at least one of the elements exhibits this degree of freedom:
- in translation in a direction substantially parallel to a direction of closure of the mould;
- in rotation in a first direction substantially at right angles to the direction of closure of the mould,
- in rotation in a second direction substantially at right angles to the direction of closure of the mould and to the first direction.

6. Mould according to any one of the preceding claims, in which at least one of the elements (34) is translationally mobile in a direction substantially parallel to a direction of closure of the mould, the adjustment device comprising return means (72) arranged to push this element against the other element (32) of the locking means (28).

7. Mould according to any one of the preceding claims, comprising means (86) for indicating the state of the magnet.

8. Mould according to the preceding claim, in which the indication means comprise a metal rod (90) provided with an indication member (92) at one end, the rod being mobile relative to a frame (88), between a position in which the indication member is visible from the outside of the frame and a position in which the member is not visible.

9. Mould according to the preceding claim, in which the indication means also comprise elastic return means (98) arranged to return the rod (94) into the visible position of the indication member.

10. Mould according to any one of the preceding claims, in which the mould comprises protection means, such as a security band (60), preventing an operator from accessing the magnet and the member.
